(19) Europäisches Patentamt
European Patent Office
Office européen des brevets

(11) **EP 4 425 011 B1**

(12) **EUROPEAN PATENT SPECIFICATION**

(45) Date of publication and mention
of the grant of the patent:
**06.05.2026 Bulletin 2026/19**

(21) Application number: **23159856.6**

(22) Date of filing: **03.03.2023**

(51) International Patent Classification (IPC):
***F16H 47/02*** *(2006.01)* ***F16H 61/16*** *(2006.01)*

(52) Cooperative Patent Classification (CPC):
**F16H 47/02; F16H 61/16;** F16H 59/44; F16H 59/48;
F16H 61/421; F16H 61/702; F16H 2061/161

(54) **METHOD FOR CHANGING OVER TRANSMISSION STAGES OF A TRANSMISSION ARRANGEMENT**

VERFAHREN ZUM UMSCHALTEN VON GETRIEBESTUFEN EINER GETRIEBEANORDNUNG

PROCÉDÉ DE CHANGEMENT D'ÉTAGES DE TRANSMISSION D'UN DISPOSITIF DE TRANSMISSION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.09.2024 Bulletin 2024/36**

(73) Proprietor: **Robert Bosch GmbH**
**70442 Stuttgart (DE)**

(72) Inventors:
• **Brix, Norman**
**89340 Leipheim (DE)**
• **Herrmann, Ronny**
**89129 Langenau (DE)**
• **Barrera Villalpando, Abraham**
**89075 Ulm (DE)**
• **Klee, Hannes**
**89233 Neu-Ulm (DE)**
• **Isfort, Ole**
**89312 Guenzburg (DE)**
• **Werner, Franz**
**89129 Langenau (DE)**
• **Mueller, Matthias**
**89129 Langenau (DE)**
• **Mumcu, Peer**
**89073 Ulm (DE)**
• **Ilk, Erich**
**86169 Augsburg (DE)**
• **Vogel, Dieter**
**89160 Dornstadt (DE)**
• **Arcolia, Alessandro**
**15121 Alessandria (IT)**
• **Alberti, Andrea**
**89077 Ulm (DE)**

(56) References cited:
**EP-A1- 2 213 910 EP-A2- 1 076 194**
**DE-U1- 202020 107 048**

**Description**

TECHNICAL FIELD

The present invention relates to the technical field of a transmission arrangement having a hydrostatic transmission and a mechanical manual transmission. In particular, the present invention relates to a method for changing over transmission stages of the transmission arrangement.

PRIOR ART

A transmission arrangement having a hydrostatic transmission and a mechanical manual transmission which is coupled in series therewith is used in travel drives, for example those of agricultural machines or working machines. Automation permits transmission stages of the manual transmission of such transmission arrangements to shift even during travel.

For this purpose, the torque between the hydraulic motor of the hydrostatic transmission and the transmission input of the manual transmission is lowered to zero. This is done by reducing the expulsion volume of the hydraulic motor to zero ("zero oscillation"). When the zero expulsion volume is reached, the old transmission stage is disengaged and the new transmission stage is engaged by means of mechanical synchronization.

Many methods have been developed for enabling a smooth transmission procedure. Three different examples are described in the following patent documents: DE 10 2016 215 992 A, DE 2020 20 107 297 U1 and IT 10 2020 000006952 A1.

For all the described methods, the core of the strategy is represented by the fact that, depending on the actual velocity of the mobile machine, after having received from the driver a request for changing a transmission stage, the changeover of the transmission stage is enabled or disabled based on said actual velocity. EP 2 213 910 A describes another process for changing gears in a multi-speed transmission driven by a hydrostatic gearbox.

The main problem, which occurs during transmission is that sometimes, after the changeover between a first transmission stage and a second transmission stage is already started, the changeover has to be aborted, since some working parameters become outside predetermined ranges.

In particular, a gear change on mobile machines always means a change in tractive force, and in the case of particularly low-cost transmission designs even an interruption in tractive force. A reduction or interruption of the tractive force when driving uphill can lead to the machine stopping or even rolling back, depending on the load and gradient. Such a behavior would lead the machine to automatically abort the changeover, which has been already started, which would cause an undesirable and for the driver behavior of the machine

At the same time, when driving downhill, a reduction in tractive force or interruption even manifests itself in reduced hydrostatic braking, which can result in critical situations for the driver and persons standing next to him. Such a behavior it totally critical and should be prevented to occur.

Objective of the present invention is, therefore, to provide a method for changing over transmission stages of a transmission arrangement, which enables to overcome the above-mentioned problems.

SUMMARY

According to the present invention a method for changing over transmission stages (46, 48) of a transmission arrangement (3) of a mobile working machine is provided, the transmission arrangement (3) comprising:

> a first hydraulic machine (8) coupled to a drive machine (2),
> a second hydraulic machine (14) having an adjustable expulsion volume (VH), wherein the second hydraulic machine (14) is fluidically connected to the first hydraulic machine (8) via a first working line (10) of the transmission arrangement (3) and a second working line (12) of the transmission arrangement (3), wherein the second hydraulic machine (14) is coupled to a manual transmission (6) of the transmission arrangement (3) so that a torque can be transmitted, the manual transmission (6) having at least two transmission stages (46, 48), the method being **characterized in that** it comprises the following steps:

> a) requesting a changeover of an engaged transmission stage (46, 48) from a first transmission stage (46, 48) to a second transmission stage (46, 48);
> b) identify a first time interval, wherein said first time interval is the time requested for said changeover from said first transmission stage (46, 48) to said second transmission stage (46, 48);
> c) estimating the velocity the mobile working machine would reach at the end of said changeover based on said first time interval identified during said step b);
> d) enabling or disabling said changeover based on said estimated velocity.

With enabling and disabling the changeover it is meant that the changeover is respectively allowed or not allowed to occur based on said estimated velocity. Said first transmission stage and said second transmission stage can be respectively one between the lower and the higher transmission stage. For each of the two cases a different value of the first time interval will be used (respectively for downshifting and for upshifting). In the step b with the wording "identify" it is meant that said information can be received for example from the control unit or it can be identified based on any different way (for example by measuring said time randomly in the past, or by receiving it from a cloud).

BRIEF DESCRIPTION OF THE FIGURES

The present invention is described with reference to the enclosed figures wherein the same reference numbers refer to the same parts and/or to similar parts and/or to corresponding parts of the system. In the figures:

    Figure 1 shows a circuit diagram of a travel drive known by the state of the art;
    Figure 2 shows a function used for evaluating if shifting between two stages can be enabled to occur based on an actual toque and an actual velocity of the mobile machine according to an embodiment of the present invention.

DETAILED DESCRIPTION

In the following, the present invention is described with reference to particular embodiments as shown in the enclosed figures. Nevertheless, the present invention is not limited to the particular embodiments described in the following detailed description and shown in the figures, but rather the embodiments described simply exemplify several aspects of the present invention, the scope of which is defined by the claims.

Further modifications and variations of the present invention will be clear for the person skilled in the art. The present description is thus to be considered as including all said modifications and/or variations of the present invention, the scope of which is defined by the claims.

In the present invention with the term "mobile working machine" is meant to represent agricultural machines or working machines and all other type of mobile machines which are not in the automotive field.

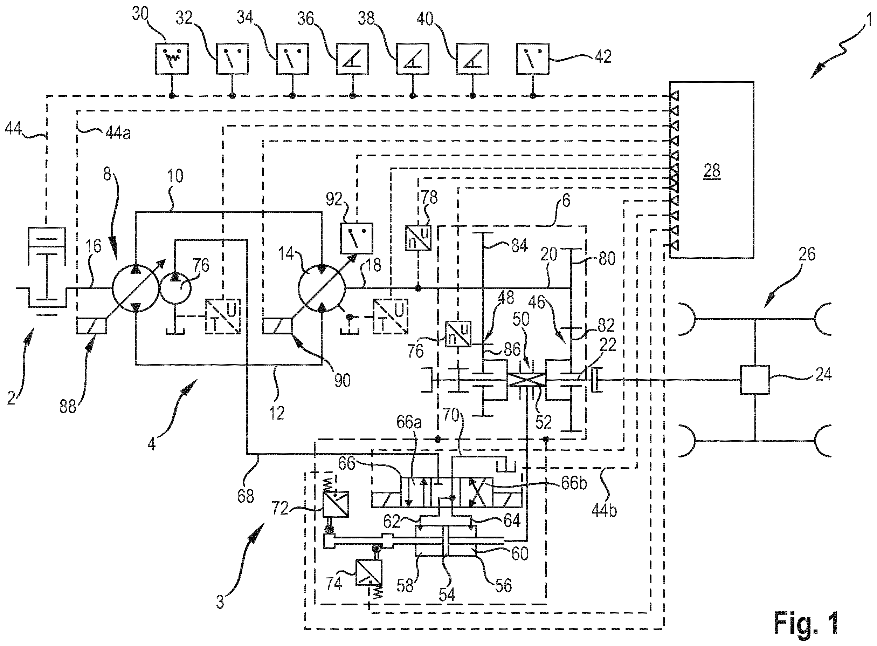

With reference to figure 1 a travel drive known from the state of the art According to fig. 1, a travel drive 1, for example that of a mobile working machine, has a transmission arrangement 3 with a drive machine 2 which is embodied as a diesel engine or an electric motor, a hydrostatic transmission 4 and a two-stage (in the exemplary embodiment) manual transmission 6. The hydrostatic transmission 4 has a first hydraulic machine 8, which is configured as an axial piston pump with a swash plate design, which is fluidically connected, in a closed, hydraulic circuit, via two working lines 10, 12 to a second hydraulic machine 14, embodied preferably as an axial piston motor with a swash plate design.

The first hydraulic machine 8 is coupled via a motor shaft 16 to the drive machine 2. A drive shaft 18 of the second hydraulic machine 14 is coupled to an input shaft 20 of the manual transmission 6. An output shaft 22 of the manual transmission 6 is coupled to a differential 24 of a two-wheeled axle 26 of the travel drive 1. The two hydraulic machines 8, 14 each have an adjustable expulsion volume. The first hydraulic machine 8 is configured here in such a way that it can operate both as a hydraulic pump and as a hydraulic motor in all four quadrants, in both directions of torque. The second hydraulic machine 14 has its adjustment range only between a zero expulsion volume and a positive maximum value.

Furthermore, the transmission arrangement 3 has a control apparatus 28, in particular for controlling the torque of the drive shaft 18 and of the transmission input shaft 20, and the expulsion volumes of the hydraulic machines 8, 14. A shifting request apparatus 30, a gear speed selection apparatus 32, a direction of travel selection apparatus 34, an accelerator pedal 36, a creeping gear speed selection apparatus 38, a brake pedal 40 and an automatic selection apparatus 42 are connected in terms of signaling to the control apparatus 28. All the specified apparatuses 30 to 42 are connected in terms of signaling via a CAN bus 44, both to the control apparatus 28 and at least to the drive machine 2.

The manual transmission 6 has a lower transmission stage 46, and a higher transmission stage 48 of the rotational speed of the output shaft 23 with respect to the rotational speed of the input shaft 18. Furthermore, the manual transmission 6 has a synchronization unit 50. An actuator 52 of the synchronization unit 50 is rigidly coupled to a piston 54 of an actuation cylinder 56.

The actuation cylinder 56 has two identical pressure medium spaces 58, 60 which are separate from the piston 54 and are connected via control lines 62, 64 to a 4/3 switching valve 66 which can be actuated electromagnetically. The latter has a first switched position 66a in which the first pressure space 58 is connected to a pressure medium line 68, and the second pressure space 60 is connected to a reservoir line 70. In a second switched position 66b, the second pressure medium space 60 is connected to the pressure medium line 68, and the first pressure medium space 58 is connected to the reservoir line 70. The first switched position 66a brings about displacement of the piston 54 here in such a way that the first transmission stage 46 is engaged by means of the synchronization unit (dog clutch) 50 and brings about the second switched position 66b, and that the second transmission stage 48 is engaged by means of the piston 54 and the dog clutch 50.

The 4/3 switching valve 66 and the actuation cylinder 56 are combined to form a unit. This unit also has two end position switches 72, 74 by means of which the successful shifting of the respective transmission stage 46, 48 can be identified on the basis of the position of the piston 54. The two end position switches 72, 74 are each connected via a signal line to the control apparatus 28. The 4/3-way switching valve 66 is connected to a feed pump 76 via the pressure medium line 68.

The shifting or changing over of the transmission stages 46, 48 can be controlled in an automated fashion by means of the control apparatus 28. For this purpose, the transmission arrangement 3 has a rotational speed sensor 76 by means of which the rotational speed of the output shaft 22 can be detected. In addition, it has a rotational speed sensor 78 for detecting the rotational speed of the input shaft 18. Furthermore, the second hydraulic machine 14 has a position detection unit 92 which is configured as a proximity switch and by means of which a zero expulsion volume of the second hydraulic machine 14 can be detected.

The lower transmission stage 46 has a gear wheel 80, which is fixedly coupled to the input shaft 20 and is in permanent engagement with an idler wheel 82, which can be coupled to the output shaft 22 via the synchronization unit 50. Correspondingly, the higher transmission stage 48 has a gear wheel 84, which is fixedly coupled to the input shaft 20, and an idler wheel 86 which is permanently engaged therewith and can be coupled to the output shaft 22 by means of the synchronization unit 50.

According to FIG. 1, the first hydraulic machine 8 has an adjustment unit 88 for adjusting its first expulsion volume, and the second hydraulic machine 14 has an adjustment apparatus 90 for adjusting its second expulsion volume. The adjustment apparatus 90 operates in this specific emo electro-proportionally (EP adjustment). In order to adjust a cradle of the second hydraulic machine 14, and therefore the second expulsion volume, the adjustment apparatus 90 has a hydraulic actuation cylinder, the pressure spaces of which, which are effective in a reciprocal fashion, can each be supplied with pressure medium via an electro-proportionally adjustable pressure regulating valve. The electro-proportional adjustment permits infinitely variable adjustment of the expulsion volume. In this context, the adjustment takes place proportionally with respect to the applied electrical actuation current.

The hydrostatic transmission 4 has a variable, continuously adjustable transmission ratio range. The manual transmission 6 which is connected downstream of the latter serves to cover a necessary speed range of the travel drive 1. The transmission arrangement 3 is configured here in such a way that the manual transmission 6 can be shifted during the travel operation.

In the following paragraph a method for changing over the transmission stages 46, 48 of the transmission arrangement 3 of the mobile working machine will be described in detail.

At the beginning, a request for a changeover will be detected by the control apparatus 28, for example through the shifting request apparatus 30. The request of changeover can be any between a request of changeover from the lower transmission stage 46 to the higher transmission stage 48 or from the higher transmission stage 48 to the lower transmission stage 46.

Preferably, in order to prosecute with the further criteria, as a first criteria it will be firstly detected if a changeover from one between the lower and the higher transmission stage is actually being carried out and still not concluded. If such a status is a status is detected the changeover will preferably not be allowed to occur.

In a second criteria an actual load at said second hydraulic machine 14, for example a torque or a variable dependent on said torque, is detected. The torque can be calculated for example based on the pressure at said second hydraulic working machine. Instead of the torque at second hydraulic working machine an actual power at said second hydraulic machine can be detected, for example by measuring the power at said drive machine and deriving the torque from the detected power. It is to be noted that there are a plenty of possibilities for detecting the load of the second hydraulic machine (torque, pressure, power at the second hydraulic machine 14 etc.). For that reason, the invention is not restricted to a particular way for detecting it.

The detected load, for example the detected torque, is compared with a reference range, wherein for the case in which the actual torque is outside said reference range, the changeover is not allowed to occur.

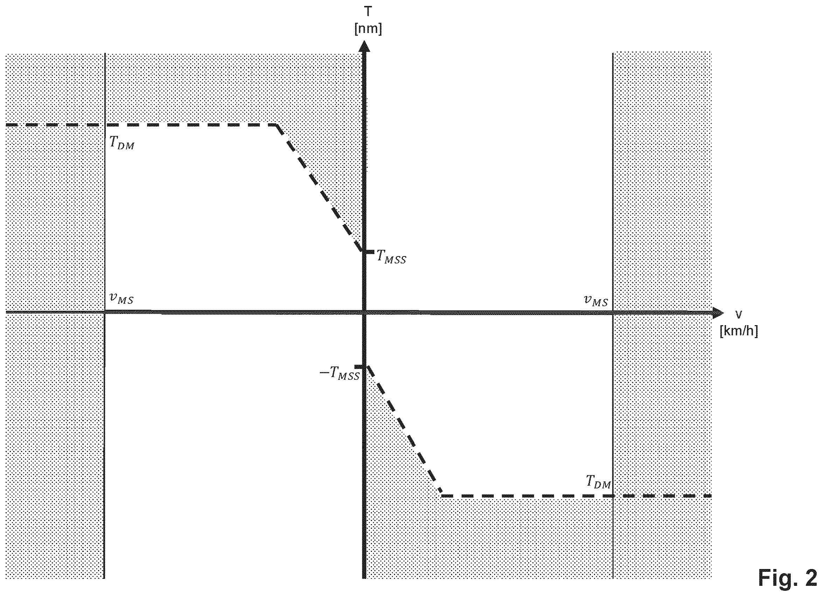

In figure 2 an example is represented in which the detected load corresponds to a detected torque. The torque can be simply calculated by means of the following formula:

$$T = \frac{V_g * \Delta p}{2\pi}$$

wherein $T$ represents the torque to be determined, $V_g$ represents the volume flow at said second hydraulic machine and $\Delta p$ represents the pressure difference between the pressure side and the suction side of said second hydraulic machine 14.

Further, in this particular embodiment the actual driving velocity of the mobile working machine is also detected, and both the information of the torque and the actual velocity are used for determining if the changeover is allowed to take place.

In the function depicted in figure 2, the white area represents an area for which the changeover can be allowed to occur. On the contrary, the area depicted with a dotted pattern represents an area for which a changeover cannot occur at all. At lower driving velocities, as can be seed in the figure, the allowed range for the torque is relevant smaller when compared with the same at higher velocities. The reason being that if, for example, the mobile machine is moving downwards at low velocities, a switching, and therefore an interruption of the brake moment given by the second hydraulic machine, would cause an uncontrolled increase of the velocity, which is in percentage more relevant when compared with the same machine driving moving at higher velocities.

Therefore, there is a value $T_{MSS}$ (positive for negative velocities and negative for positive velocities) for the torque, whose absolute value is lower that the torque admitted for higher velocities $T_{DM}$. Further, it is to be noted that at too high velocities (higher than $v_{ms}$) no changeover is allowed to occur a tall.

Summarizing, as explained above, after having measured the actual driving velocity and identified the actual load of the second hydraulic machine, by using the depicted function, it will be evaluated if the changeover can occur (white region) or has to be prevented to occur (dotted region).

In a third criteria it is controlled if a changeover is allowed to occur based on a first time interval, wherein said first time interval is the time requested for shifting from a first transmission stage to a second transmission stage.

In this third criteria, as a first step, an actual velocity is compared with a reference value. Said reference value is dependent on which shifting request is requested. If there is a request for changeover from the lower transmission stage 46 to the higher transmission stage 48 the reference value $v_{mu}$ is normally higher when compared with the reference value $v_{md}$ used when there is a request of changeover from the higher transmission stage 48 to the lower transmission stage 46. In order to give a numerical example $v_{mu}$ can be equal to 15 km/h and $v_{md}$ can be equal to 8-9 km/h.

In the following paragraphs, in order to render the description of this third criteria more comprehensive, the description is divided into two parts. In the first part the case in which a request for changeover from the lower transmission stage 46 to the higher transmission stage 48 is described. The second part will describe the case in which a changeover from the higher transmission stage 48 to the lower transmission stage 46 is requested. However, due to the fact that the procedure is completely analogous, in order to prevent redundancies, the second part will be only briefly summarized.

As described above, in the following paragraphs the third criteria in the case of a request for changeover from the lower transmission stage 46 to the higher transmission stage 48 will be described. Firstly, as described above, it will be detected if the absolute value of the actual velocity is lower than $v_{mu}$.

$$|v| \leq v_{mu}$$

If the absolute value is higher, than the changeover will not be allowed to occur.

Further, in a second step of said third criteria, said first time interval $t_u$ is identified (for example the information was already saved in the control unit 28). In this specific case the first time interval is the time requested for changeover from the lower transmission stage 46 to the higher transmission stage 48. Further, based on the detected actual velocity of the mobile machine a velocity that the mobile working machine would reach at the end of said shifting is estimated. Based on said estimated velocity it will be then evaluated if the changeover is allowed to occur or not. Said velocity is calculated based both on the actual velocity of the mobile working machine and the actual acceleration (or deceleration) of the machine. In this regard, the following criteria is used:

$$|v + a^* t_u| \leq v_{mu}$$

Wherein v represents the actual velocity of the mobile working machine, a, the actual acceleration (or deceleration), $t_u$ said first time interval and $v_{mu}$ the above-mentioned reference value. Summarized, this second step controls that the condition analyzed in the first step would also be fulfilled at the end of the changeover. Since the acceleration (or deceleration) a will change during the changeover, it can be recommended to consider also this behavior in this second step and to use a value of the acceleration, which takes this behavior into account, for example by increasing the expected time $t_u$. If this condition is not fulfilled, then the changeover will not be allowed to occur.

In a third step a second time interval $t_{ua}$ is identified. The third time step, in this specific case, is the time the time requested for detecting a condition that would cause a request of abortion of said changeover from the lower transmission stage 46 to the higher transmission stage 48. For example, said time is save in the control unit and is the time after which the control unit will request an abortion of the changeover since after that time the changeover has still not have been concluded.

In this third optional criteria there are two different procedures (condition to be checked), depending on the sign of the actual velocities. However, both procedures have in common that it is considered the sign of the actual velocity and the velocity the mobile working machine would reach after said second time interval $t_{ua}$. If the signs are different than the changeover is prevented from occurring. The reason being that it has to be prevented that the mobile machine changes driving direction during changeover, since such a behavior would be unexpected for the driver.

Therefore, if the actual velocity is positive, it will be proved if the following criteria is fulfilled:

$$v + a^* t_{ua} > 0$$

Otherwise, if the actual velocity is negative, it will be proved if the following criteria is fulfilled:

$$v + a^* t_{ua} < 0$$

If any of the two above mentioned criteria is not fulfilled the changeover will be prevented from occurring.

As described above, in the following paragraphs, in this second part will be shortly described the case in which a changeover from the higher transmission stage 48 to the lower transmission stage 46 is requested.

In a first step the following condition will be

proven:

$$|v| \leq v_{md}$$

In a second step the following condition will be checked:

$$|v + a* t_d| \leq v_{md}$$

Wherein v represents the actual velocity of the mobile working machine, a the actual acceleration (or deceleration), $t_d$ said first time interval need for downshifting and $v_{md}$ the above-mentioned reference value.

If the actual velocity is positive, it will be proven in the third step if the following criteria is fulfilled:

$$v + a* t_{da} > 0$$

Otherwise, if the actual velocity is negative, it will be proved if the following criteria is fulfilled:

$$v + a* t_{da} < 0$$

wherein $t_{da}$ represents said second time interval in case of downshifting.

It is to be noted that the first criteria (controlling if switching is being carried out), the second criteria (controlling if the actual load of the second hydraulic machine) and the third criteria (controlling based on the time requested for the changeover if the velocity criteria at the end of the changeover is also respected) has been presented consequently one after the other. However, it is to be noted that the order can be also different and that all the three steps can be conducted in parallel at the same time and that also one or more of the mentioned steps can also be omitted.

While the present invention has been described with reference to the embodiments described above, it is clear for the skilled person that it is possible to realize several modifications, variations and improvements of the present invention in the light of the teaching described above and within the ambit of the enclosed claims.

In addition, those areas in which it is believed that those of ordinary skill in the art are familiar, have not been described herein in order not to unnecessarily obscure the invention described. Accordingly, the invention is not to be limited by the specific illustrative embodiments, but only by the scope of the appended claims.

**Claims**

1. A method for changing over transmission stages (46, 48) of a transmission arrangement (3) of a mobile working machine, the transmission arrangement (3) comprising:

a first hydraulic machine (8) coupled to a drive machine (2),
a second hydraulic machine (14) having an adjustable expulsion volume (VH), wherein the second hydraulic machine (14) is fluidically connected to the first hydraulic machine (8) via a first working line (10) of the transmission arrangement (3) and a second working line (12) of the transmission arrangement (3), wherein the second hydraulic machine (14) is coupled to a manual transmission (6) of the transmission arrangement (3) so that a torque can be transmitted, the manual transmission (6) having at least two transmission stages (46, 48), the method being **characterized in that** it comprises the following steps:

a) requesting a changeover of an engaged transmission stage (46, 48) from a first transmission stage (46, 48) to a second transmission stage (46, 48);
b) identify a first time interval, wherein said first time interval is the time requested for said changeover from said first transmission stage (46, 48) to said second transmission stage (46, 48);
c) estimating the velocity the mobile working machine would reach at the end of said changeover based on said first time interval identified during said step b);
d) enabling or disabling said changeover based on said estimated velocity.

2. Method according to claim 1, wherein in said step c) for estimating said velocity an acceleration or a deceleration of the mobile working machine is considered.

3. Method according to any of claims 1 or 2, wherein said method comprises further the following steps:

e. Identify a second time interval, wherein said second time interval is the time requested for detecting a condition that would cause a request of abortion of said changeover;
f. estimating the velocity reached by said mobile working machine after said second time interval;

wherein in said step d. the changeover is disabled if the estimated velocity in said step f. and the actual velocity have a different sign.

4. Method according to any of claims 1 to 3, wherein an actual load at said second hydraulic machine (14) is detected, wherein said load is compared with a reference range, wherein if the actual load is outside said reference range, in said step d said changeover is disabled.

**5.** Method according to claim 4, wherein said reference range is determined in function of the actual driving velocity of said mobile working machine.

**6.** Method according to claim 5, wherein lower driving velocities of said mobile working machine said reference range is smaller.

**7.** Method according to any of said claims 1 to 6, wherein in said step d) the changeover is disabled if it is detected that a changeover is actually being carried out.

**8.** Control unit (28) adapted to perform a method according to any one of claims 1 to 7.

**9.** A mobile working machine comprising a transmission arrangement (3), the transmission arrangement (3) comprising a first hydraulic machine (8) coupled to a drive machine (2) and a second hydraulic machine (14) having an adjustable expulsion volume (VH), wherein the second hydraulic machine (14) is fluidically connected to the first hydraulic machine (8) via a first working line (10) of the transmission arrangement (3) and a second working line (12) of the transmission arrangement (3), wherein the second hydraulic machine (14) is coupled to a manual transmission (6) of the transmission arrangement (3) so that a torque can be transmitted, the manual transmission (6) having at least two transmission stages (46, 48), wherein the mobile working machine comprises a control unit (28) according to claim 8.

**10.** Computer program adapted to execute the method according to any one of claims 1 to 7.

**11.** Machine-readable storage medium having a computer program stored thereon according to claim 10.

**Patentansprüche**

**1.** Verfahren zum Umschalten von Getriebestufen (46, 48) einer Getriebeanordnung (3) einer mobilen Arbeitsmaschine, wobei die Getriebeanordnung (3) umfasst:

eine erste Hydraulikmaschine (8), die mit einer Antriebsmaschine (2) gekoppelt ist, eine zweite Hydraulikmaschine (14) mit einem einstellbaren Verdrängungsvolumen (VH), wobei die zweite Hydraulikmaschine (14) über eine erste Arbeitsleitung (10) der Getriebeanordnung (3) und eine zweite Arbeitsleitung (12) der Getriebeanordnung (3) fluidisch mit der ersten Hydraulikmaschine (8) verbunden ist, wobei die zweite Hydraulikmaschine (14) mit einem Schaltgetriebe (6) der Getriebeanordnung (3) so gekoppelt ist, dass ein Drehmoment übertragen werden kann, wobei das Schaltgetriebe (6) mindestens zwei Getriebestufen (46, 48) aufweist, wobei das Verfahren **dadurch gekennzeichnet ist, dass** es die folgenden Schritte umfasst:

a) Anfordern eines Umschaltens einer eingelegten Getriebestufe (46, 48) von einer ersten Getriebestufe (46, 48) in eine zweite Getriebestufe (46, 48);
b) Identifizieren eines ersten Zeitintervalls, wobei das erste Zeitintervall die für das Umschalten von der ersten Getriebestufe (46, 48) in die zweite Getriebestufe (46, 48) angeforderte Zeit ist;
c) Schätzen der Geschwindigkeit, die die mobile Arbeitsmaschine am Ende des Umschaltvorgangs erreichen würde, basierend auf dem während des Schritts b) identifizierten ersten Zeitintervall;
d) Freigeben oder Sperren des Umschaltvorgangs basierend auf der geschätzten Geschwindigkeit.

**2.** Verfahren nach Anspruch 1, wobei in dem Schritt c) zum Schätzen der Geschwindigkeit eine Beschleunigung oder eine Verzögerung der mobilen Arbeitsmaschine berücksichtigt wird.

**3.** Verfahren nach einem der Ansprüche 1 oder 2, wobei das Verfahren ferner die folgenden Schritte umfasst:

e. Identifizieren eines zweiten Zeitintervalls, wobei das zweite Zeitintervall die Zeit ist, die zum Erkennen einer Bedingung angefordert wird, die eine Anforderung zum Abbruch des Umschaltvorgangs verursachen würde;
f. Schätzen der Geschwindigkeit, die von der mobilen Arbeitsmaschine nach dem zweiten Zeitintervall erreicht wird;

wobei in dem Schritt d. der Umschaltvorgang gesperrt wird, wenn die in dem Schritt f. geschätzte Geschwindigkeit und die tatsächliche Geschwindigkeit ein unterschiedliches Vorzeichen haben.

**4.** Verfahren nach einem der Ansprüche 1 bis 3, wobei eine tatsächliche Last an der zweiten Hydraulikmaschine (14) erfasst wird, wobei die Last mit einem Referenzbereich verglichen wird, wobei, wenn die tatsächliche Last außerhalb des Referenzbereichs liegt, in dem Schritt d das Umschalten gesperrt wird.

**5.** Verfahren nach Anspruch 4, wobei der Referenzbereich in Abhängigkeit von der tatsächlichen Fahrgeschwindigkeit der mobilen Arbeitsmaschine bestimmt wird.

**6.** Verfahren nach Anspruch 5, wobei bei niedrigeren Fahrgeschwindigkeiten der mobilen Arbeitsmaschine der Referenzbereich kleiner ist.

**7.** Verfahren nach einem der Ansprüche 1 bis 6, wobei in dem Schritt d) das Umschalten gesperrt wird, wenn erfasst wird, dass ein Umschalten tatsächlich ausgeführt wird.

**8.** Steuereinheit (28), die dazu eingerichtet ist, ein Verfahren nach einem der Ansprüche 1 bis 7 durchzuführen.

**9.** Mobile Arbeitsmaschine, umfassend eine Getriebeanordnung (3), wobei die Getriebeanordnung (3) eine erste Hydraulikmaschine (8), die mit einer Antriebsmaschine (2) gekoppelt ist, und eine zweite Hydraulikmaschine (14) mit einem einstellbaren Verdrängungsvolumen (VH) umfasst, wobei die zweite Hydraulikmaschine (14) über eine erste Arbeitsleitung (10) der Getriebeanordnung (3) und eine zweite Arbeitsleitung (12) der Getriebeanordnung (3) fluidisch mit der ersten Hydraulikmaschine (8) verbunden ist, wobei die zweite Hydraulikmaschine (14) mit einem Schaltgetriebe (6) der Getriebeanordnung (3) so gekoppelt ist, dass ein Drehmoment übertragen werden kann, wobei das Schaltgetriebe (6) mindestens zwei Getriebestufen (46, 48) aufweist, wobei die mobile Arbeitsmaschine eine Steuereinheit (28) nach Anspruch 8 umfasst.

**10.** Computerprogramm, das dazu eingerichtet ist, das Verfahren nach einem der Ansprüche 1 bis 7 auszuführen.

**11.** Maschinenlesbares Speichermedium mit einem darauf gespeicherten Computerprogramm nach Anspruch 10.

**Revendications**

**1.** Procédé de changement d'étages de transmission (46, 48) d'un agencement de transmission (3) d'une machine de travail mobile, l'agencement de transmission (3) comprenant:

une première machine hydraulique (8) couplée à une machine d'entraînement (2),
une seconde machine hydraulique (14) ayant un volume d'expulsion réglable (VH), dans lequel la seconde machine hydraulique (14) est connectée fluidiquement à la première machine hydraulique (8) via une première conduite de travail (10) de l'agencement de transmission (3) et une seconde conduite de travail (12) de l'agencement de transmission (3), dans lequel la seconde machine hydraulique (14) est couplée à une transmission manuelle (6) de l'agencement de transmission (3) de sorte qu'un couple peut être transmis, la transmission manuelle (6) ayant au moins deux étages de transmission (46, 48),
le procédé étant **caractérisé en ce qu'**il comprend les étapes suivantes :

a) demander un changement d'un étage de transmission engagé (46, 48) d'un premier étage de transmission (46, 48) à un second étage de transmission (46, 48) ;
b) identifier un premier intervalle de temps, dans lequel ledit premier intervalle de temps est le temps demandé pour ledit changement dudit premier étage de transmission (46, 48) audit second étage de transmission (46, 48) ;
c) estimer la vitesse que la machine de travail mobile atteindrait à la fin dudit changement sur la base dudit premier intervalle de temps identifié lors de ladite étape b) ;
d) activer ou désactiver ledit changement sur la base de ladite vitesse estimée.

**2.** Procédé selon la revendication 1, dans lequel à ladite étape c) pour estimer ladite vitesse, une accélération ou une décélération de la machine de travail mobile est prise en compte.

**3.** Procédé selon l'une quelconque des revendications 1 ou 2, dans lequel ledit procédé comprend en outre les étapes suivantes :

e. identifier un second intervalle de temps, dans lequel ledit second intervalle de temps est le temps demandé pour détecter une condition qui causerait une demande d'interruption dudit changement ;
f. estimer la vitesse atteinte par ladite machine de travail mobile après ledit second intervalle de temps ;

dans lequel à ladite étape d. le changement est désactivé si la vitesse estimée à ladite étape f. et la vitesse réelle ont un signe différent.

**4.** Procédé selon l'une quelconque des revendications 1 à 3, dans lequel une charge réelle au niveau de ladite seconde machine hydraulique (14) est détectée, dans lequel ladite charge est comparée à une plage de référence, dans lequel si la charge réelle est en dehors de ladite plage de référence, à ladite étape d ledit changement est désactivé.

**5.** Procédé selon la revendication 4, dans lequel ladite plage de référence est déterminée en fonction de la vitesse d'entraînement réelle de ladite machine de travail mobile.

6. Procédé selon la revendication 5, dans lequel à des vitesses d'entraînement plus faibles de ladite machine de travail mobile, ladite plage de référence est plus petite.

7. Procédé selon l'une quelconque desdites revendications 1 à 6, dans lequel à ladite étape d) le changement est désactivé s'il est détecté qu'un changement est effectivement en cours d'exécution.

8. Unité de commande (28) adaptée pour exécuter un procédé selon l'une quelconque des revendications 1 à 7.

9. Machine de travail mobile comprenant un agencement de transmission (3), l'agencement de transmission (3) comprenant une première machine hydraulique (8) couplée à une machine d'entraînement (2) et une seconde machine hydraulique (14) ayant un volume d'expulsion réglable (VH), dans laquelle la seconde machine hydraulique (14) est connectée fluidiquement à la première machine hydraulique (8) via une première conduite de travail (10) de l'agencement de transmission (3) et une seconde conduite de travail (12) de l'agencement de transmission (3), dans laquelle la seconde machine hydraulique (14) est couplée à une transmission manuelle (6) de l'agencement de transmission (3) de sorte qu'un couple peut être transmis, la transmission manuelle (6) ayant au moins deux étages de transmission (46, 48), dans laquelle la machine de travail mobile comprend une unité de commande (28) selon la revendication 8.

10. Programme d'ordinateur adapté pour exécuter le procédé selon l'une quelconque des revendications 1 à 7.

11. Support de stockage lisible par machine sur lequel est stocké un programme d'ordinateur selon la revendication 10.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016215992 A
- DE 202020107297 U1
- IT 102020000006952 A1
- EP 2213910 A